(19) Europäisches Patentamt
European Patent Office
Office européen des brevets

(11) **EP 3 848 791 B1**

(12) **EUROPEAN PATENT SPECIFICATION**

(45) Date of publication and mention
of the grant of the patent:
**30.03.2022 Bulletin 2022/13**

(21) Application number: **20204359.2**

(22) Date of filing: **28.10.2020**

(51) International Patent Classification (IPC):
***G06F 7/499*** *(2006.01)*

(52) Cooperative Patent Classification (CPC):
**G06F 7/49942;** G06F 2207/4824

(54) **ARITHMETIC PROCESSING DEVICE, METHOD FOR CONTROLLING ARITHMETIC PROCESSING DEVICE, AND ARITHMETIC PROCESSING PROGRAM**

VORRICHTUNG ZUR ARITHMETISCHEN VERARBEITUNG, VERFAHREN ZUR STEUERUNG EINER VORRICHTUNG ZUR ARITHMETISCHEN VERARBEITUNG UND PROGRAMM ZUR ARITHMETISCHEN VERARBEITUNG

DISPOSITIF DE TRAITEMENT ARITHMÉTIQUE, PROCÉDÉ DE COMMANDE D'UN DISPOSITIF DE TRAITEMENT ARITHMÉTIQUE, ET PROGRAMME DE TRAITEMENT ARITHMÉTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.01.2020 JP 2020000886**

(43) Date of publication of application:
**14.07.2021 Bulletin 2021/28**

(73) Proprietor: **FUJITSU LIMITED
Kanagawa 211-8588 (JP)**

(72) Inventor: **Yoda, Katsuhiro
Kanagawa 211-8588 (JP)**

(74) Representative: **Hoffmann Eitle
Patent- und Rechtsanwälte PartmbB
Arabellastraße 30
81925 München (DE)**

(56) References cited:
**US-A1- 2019 095 175     US-A1- 2019 266 473
US-A1- 2019 339 939**

**Description**

[Technical Field]

The embodiment discussed herein is related to an arithmetic processing device, a method for controlling the arithmetic processing device, and an arithmetic processing program.

[Background Art]

Recently, the demand for deep learning is increasing. In the deep learning, various calculations including multiplication, a product-sum operation, and vector multiplication are executed. In the deep learning, requests for the accuracy of individual operations are not as strict as other computer processing. For example, for existing signal processing or the like, a programmer develops a computer program while avoiding digit overflow as much as possible. On the other hand, in the deep learning, a large value is accepted to be saturated to some extent. This is due to the fact that, in the deep learning, the adjustment of a coefficient (weight) to be used to execute a convolution operation on a plurality of input data items is a main process, and an input data item that is among the input data items and largely different from the other input data items is not treated as an important data item in many cases. This is due to the fact that, since a large amount of data is repeatedly used to adjust the coefficient, digits of a value saturated once are adjusted based on the progress of the learning so that the value is not saturated and is reflected in the adjustment of the coefficient.

To reduce the area of a chip of an arithmetic processing device for the deep learning and improve power performance and the like in consideration of such characteristics of the deep learning, an operation is considered to be executed using a fixed-point number without using a floating-point number. This is due to the fact that a circuit configuration for the fixed-point number is simpler than that for the floating-point number.

In recent years, dedicated accelerators for deep learning have been actively developed. It is preferable that an operation to be executed using a fixed-point number be used to improve an area efficiency for an operation to be executed in a dedicated accelerator. For example, hardware has been developed, in which the number of operation bits, for example, a 32-bit floating-point number is reduced to an 8-bit fixed-point number to improve operation performance per area. By reducing the 32-bit floating-point number to the 8-bit fixed-point number, it is possible to simply obtain performance per area that is 4 times that when the 32-bit floating-point number is used. A process of expressing a sufficiently accurate actual number using a small number of bits is referred to as quantization.

However, since a dynamic range of a fixed-point number is small, the accuracy of executing an operation using the fixed-point number is lower than that of executing an operation using a floating-point number in some cases. Therefore, even in deep learning, the accuracy of expressing a small value, for example, the number of significant digits is requested to be considered. There is a technique for determining the number of significant digits of a fixed-point number using statistical information of the positions of bits of an operation result and optimizing a decimal point position.

In the existing technique, statistical information of a previous iteration is used to determine a decimal point position for a next iteration, and an operation of the next iteration is executed using the determined decimal point position. An iteration is also referred to as a mini-batch.

As a technique for determining a decimal point position of a fixed-point number using statistical information, there is an existing technique for determining a decimal point position using information indicating a range from the position of the least significant bit to the position of the most significant bit and information indicating a range from the position of a sign bit to the position of the least significant bit. As a technique for executing a fixed-point operation, there is an existing technique for executing a rounding process and a saturation process on an operation result output based on data indicating a specified decimal point position and executing a fixed-point operation.

[Citation List]

[Patent Literature]

[PTL 1] Japanese Laid-open Patent Publication No. 2018-124681
[PTL 2] Japanese Laid-open Patent Publication No. 2019-74951
[PTL 3] Japanese Laid-open Patent Publication No. 2009-271598

[Summary of Invention]

[Technical Problem]

However, the number of cases where a processing scheme that is referred to as Define-by-Run is introduced in a recent deep learning framework, for example, pyTorch or chainer, has increased. Hereinafter, Define-by-Run is abbreviated as DbR. In DbR, a computational graph serving as the structure of a neural network is built, while a deep learning process is executed. In DbR, the computational graph changes for each of iterations of learning in the earliest case. It is, therefore, difficult to store a decimal point position estimated in the past. The change in the computational graph indicates that a plurality of computational graphs exist when an operation is progressed via a certain layer and that it is difficult to identify any of the computational graphs that is to be used for the certain layer in a specific iteration. Arithmetic processing that is executed in existing deep learning and is not DbR is referred to as Define-and-Run, and a computational graph is identified at the time of the start of the learning.

In the case where deep learning is executed using DbR, even when statistical information on a previous iteration is used, the previous iteration does not exist in some cases or the statistical information on the previous iteration is information on an iteration preceding a current iteration by many iterations. Therefore, when the deep learning is executed using DbR, and past statistical information is used, the learning may fail and it is difficult to determine a decimal point position using the past statistical information.

Therefore, a method for executing an operation of a current layer, determining a decimal point position from statistical information of results of the operation, and executing the operation again using the calculated decimal point position is considered. This method, however, has a problem that the same operation is executed twice and a time period for executing the learning is long.

Even in the technique for determining a decimal point position using information indicating a range from the position of the least significant bit to the position of the most significant bit and information indicating a range from the position of a sign bit to the position of the least significant bit, past statistical information is used. It is therefore difficult to apply the technique to deep learning using DbR. In the existing technique for executing the rounding process and the saturation process on an operation result output based on data indicating a specified decimal point position, how to determine the decimal point position is not considered and it is difficult to execute deep learning using DbR.

The techniques disclosed herein have been devised under the foregoing circumstances. The techniques disclosed herein aim to provide an arithmetic processing device, a method for controlling the arithmetic processing device, and an arithmetic processing program that improve the accuracy of learning using a fixed decimal point when the deep learning is executed using Define-by-Run.

[Solution to Problem]

In an aspect of the arithmetic processing device disclosed herein, the method, disclosed herein, for controlling the arithmetic processing device, and the arithmetic processing program disclosed herein, an operation section executes an operation. A decimal point position determiner determines a specific decimal point position based on statistical information of an operation result of the operation. A manager acquires a first operation result of a first operation executed by the operation section using a candidate decimal point position, acquires a specific decimal point position determined by the decimal point position determiner based on statistical information of the first operation result, and acquires, as a final operation result, either the first operation result or a second operation result of a second operation executed by the operation section using the specific decimal point position, based on the candidate decimal point position and the specific decimal point position.

[Advantageous Effects of Invention]

According to one aspect, the invention may improve the accuracy of learning using a fixed decimal point when the deep learning is executed using Define-by-Run, and reduce a time period for the learning.

[Brief Description of Drawings]

FIG. 1 is a configuration diagram illustrating an overview of a server;
FIG. 2 is a diagram illustrating an example of deep learning in a neural network;
FIG. 3 is a diagram describing DbR;
FIG. 4 is a block diagram of an operation circuit;

FIG. 5 is a block diagram illustrating details of a controller;

FIG. 6 is a flowchart of a deep learning process by the operation circuit according to a first embodiment;

FIG. 7 is a flowchart of a deep learning process by an operation circuit according to a second embodiment;

FIG. 8A is a flowchart of a deep learning process by an operation circuit according to a third embodiment; and

FIG. 8B is the flowchart of the deep learning process by the operation circuit according to the third embodiment.

[Description of Embodiments]

Hereinafter, embodiments of an arithmetic processing device disclosed herein, a method, disclosed herein, for controlling the arithmetic processing device, and an arithmetic processing program disclosed herein are described in detail based on the drawings. The arithmetic processing device disclosed herein, the method, disclosed herein, for controlling the arithmetic processing device, and the arithmetic processing program disclosed herein are not limited by the following embodiments.

[First Embodiment]

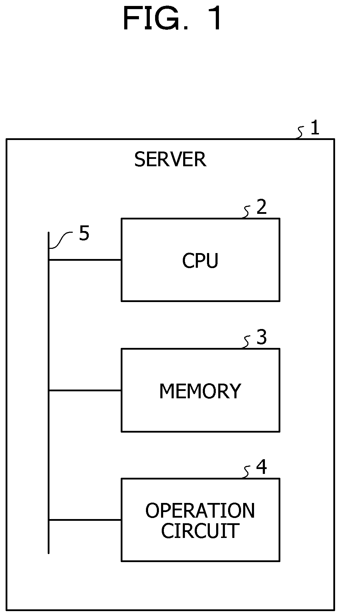

FIG. 1 is a configuration diagram illustrating an overview of a server. The server 1 executes deep learning. The server 1 includes a central processing unit (CPU) 2, a memory 3, and an operation circuit 4. The CPU 2, the memory 3, and the operation circuit 4 are coupled to each other via a Peripheral Component Interconnect Express (PCIe) bus 5.

The CPU 2 executes a program stored in the memory 3 and achieves various functions as the server 1. For example, the CPU 2 transmits a control signal via the PCIe bus 5 and activates a control core included in the operation circuit 4. The CPU 2 outputs, to the operation circuit 4, data to be used for an operation and an instruction to execute the operation and causes the operation circuit 4 to execute the operation.

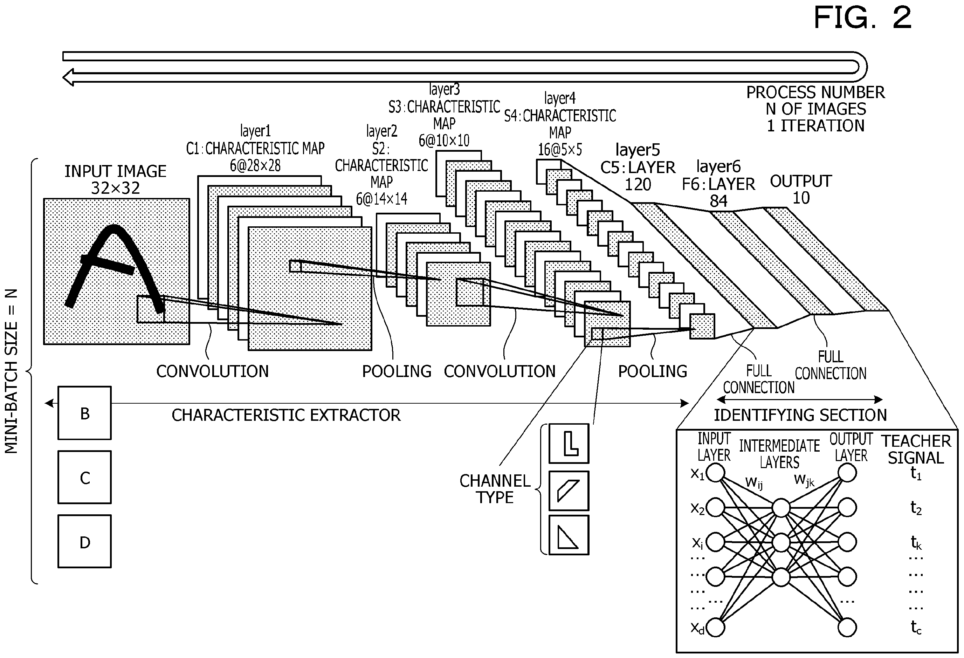

The operation circuit 4 executes an operation of each of layers in the deep learning. An example of the deep learning in a neural network is described with reference to FIG. 2. FIG. 2 is a diagram illustrating an example of the deep learning in the neural network. For example, the neural network executes a process in a forward direction for recognizing and identifying an image, and executes a process in a backward direction for determining a parameter to be used for the process in the forward direction. A direction toward the right side of a paper sheet of FIG. 2 is indicated by an arrow illustrated in an upper part of FIG. 2 and is the forward direction, while a direction toward the left side of the paper sheet is the backward direction.

The neural network illustrated in FIG. 2 executes a convolution layer process and a pooling layer process on an input image, extracts a characteristic of the image, and identifies the image. A process illustrated in a central part of the paper sheet of FIG. 2 indicates the process in the forward direction.

In FIG. 2, in the process in the forward direction, a characteristic extractor executes the convolution layer process and the pooling layer process on the input image and generates a characteristic map. After that, an identifying section executes full connection on the characteristic map and outputs a result of the identification from an output layer. The convolution layer process is also referred to as a convolution operation. The pooling layer process is also referred to as a pooling operation. After that, the result of the identification is compared with correct data, and a differential value that is the result of the comparison is obtained. Next, as the process in the backward direction, a learning process is executed to calculate an error in the forward direction in each of a convolution layer and a fully connected layer from the differential value and calculate a next weight for each of the layers.

The deep learning is sectioned into process units and executed. The process units are referred to as mini-batches. A mini-batch is a combination of a plurality of data items obtained by dividing a set of the input data to be subjected to the learning into a predetermined number of groups. In FIG. 2, a number N of images form one mini-batch. A unit of the series of processes in the forward and backward directions on each mini-batch is referred to as an iteration.

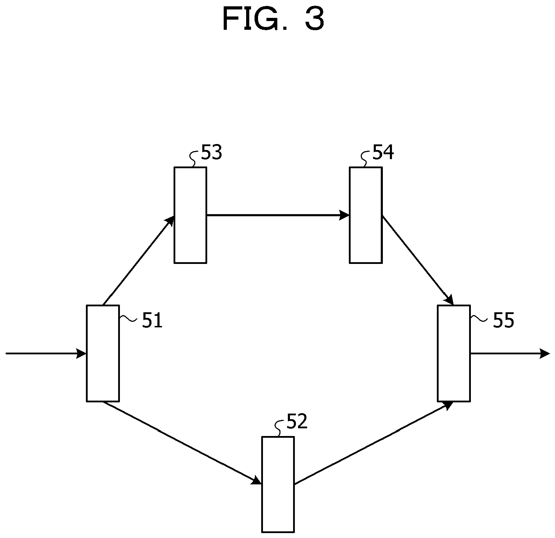

In the present embodiment, the deep learning is executed using DbR. FIG. 3 is a diagram describing DbR. When deep learning is executed using Define-and-Run, a computational graph is fixed. Therefore, whether the deep learning is executed via layers 51, 53, 54, and 55 or via layers 51, 52 and 55 is determined before the execution of an operation. On the other hand, when an operation is to be executed using DbR, a computational graph is not determined before the execution of the operation, and whether the deep learning is executed from the layer 51 via the layer 52 or via the layer 53 is stochastically determined. Therefore, the computational graph dynamically changes during the operation. It is therefore difficult for the operation circuit 4 to determine a decimal point position to be used for the operation in advance. To avoid this, the operation circuit 4 executes the operation in accordance with the following procedure.

Return to FIG. 2 to continue the description. The operation circuit 4 executes operations of the layers in each of a predetermined number of mini-batches in the deep learning, acquires and accumulates statistical information of variables of the layers, and automatically adjusts fixed decimal point positions of the variables used for the deep learning. Next, the operation circuit 4 is described in detail.

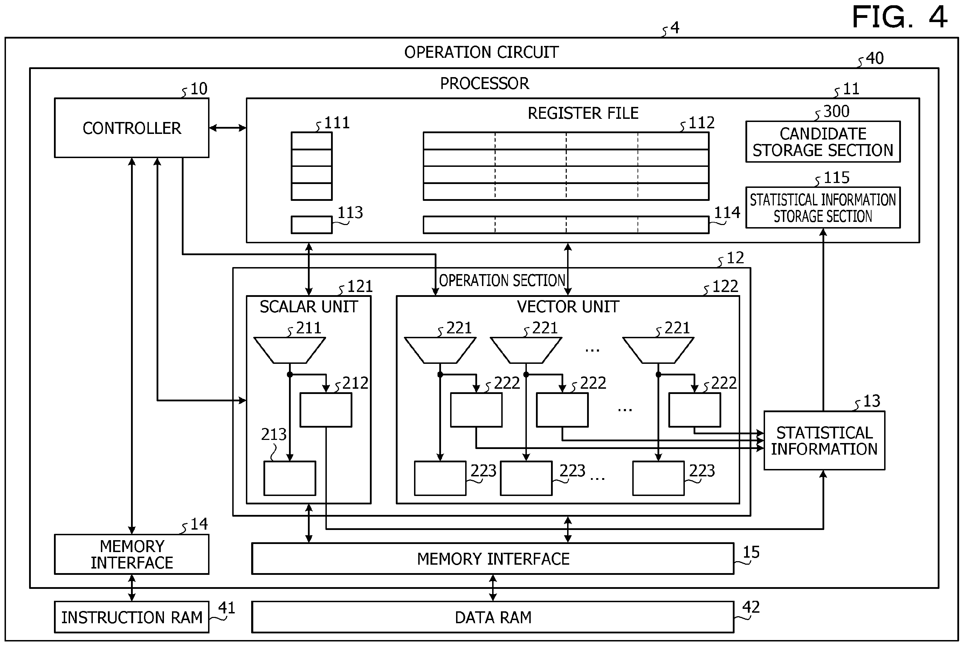

FIG. 4 is a block diagram of the operation circuit. As illustrated in FIG. 4, the operation circuit 4 includes a processor 40, an instruction random-access memory (RAM) 41, and a data RAM 42.

The processor 40 includes a controller 10, a register file 11, an operation section 12, a statistical information aggregator 13, a memory interface 14, and a memory interface 15. The memory interface 14 couples the processor 40 to the instruction RAM 41. The memory interface 15 couples the processor 40 to the data RAM 42. In the following description, description of the memory interfaces 14 and 15 between the sections of the processor 40 and the RAMs 41 and 42 is omitted from description of access by each of the sections of the processor 40 to the instruction RAM 41 or the data RAM 42.

The instruction RAM 41 is a storage device for storing an instruction transmitted from the CPU 2. The instruction stored in the instruction RAM 41 is fetched and executed by the controller 10. The data RAM 42 is a storage device for storing data to be used to execute an operation specified by the instruction. The data stored in the data RAM 42 is used for the operation executed by the operation section 12.

The register file 11 includes a scalar register file 111, a vector register file 112, an accumulator register 113, a vector accumulator register 114, a statistical information storage section 115, and a candidate storage section 300.

The scalar register file 111 and the vector register file 112 store data to be used for an operation. The data is input data, data during the execution of the learning process, and the like. The accumulator register 113 and the vector accumulator register 114 temporarily store data when the operation section 12 executes an operation, such as accumulation.

The statistical information storage section 115 acquires and stores statistical information aggregated by the statistical information aggregator 13. The statistical information is information on a decimal point position of an operation result. The statistical information is any or a combination of a distribution of unsigned most significant bit positions, a distribution of non-zero least significant bit positions, and a plurality of information items including the maximum value among the unsigned most significant bit positions, the minimum value among the non-zero least significant bit positions, or the like.

The candidate storage section 300 stores a number N of operation results of a preceding operation executed by the operation section 12 using a number N of candidate decimal point positions specified by an operating person. The candidate decimal point positions and the preceding operation are described later in detail.

Next, the operation section 12 is described. The operation section 12 includes a scalar unit 121 and a vector unit 122.

The scalar unit 121 is coupled to the controller 10, the register file 11, and the memory interface 15. The scalar unit 121 includes an operator 211, a statistical information acquirer 212, and a data converter 213. In the present embodiment, the scalar unit 121 executes the preceding operation using the number N of candidate decimal point positions to acquire statistical information. When a candidate decimal point position that matches a decimal point position calculated from the statistical information does not exist, the scalar unit 121 executes two operations that are a main operation of executing calculation using the decimal point position determined from the statistical information of the preceding operation and obtaining operation results.

The operator 211 uses one or some of data items held in the data RAM 42, the scalar register file 111, and the accumulator register 113 to execute an operation, such as a product-sum operation. The one or some data items used by the operator 211 for the operation is or are an example of "input data". The operation to be executed by the operator 211 in the preceding operation is the same as or similar to an operation to be executed by the operator 211 in the main operation. The operator 211 executes the operations using a bit width sufficient to represent operation results. The operator 211 outputs the operation results to the data RAM 42, the statistical information acquirer 212, and the data converter 213.

The statistical information acquirer 212 receives input of data of the operation results from the operator 211. The statistical information acquirer 212 acquires statistical information from the data of the operation results. After that, the statistical information acquirer 212 outputs the acquired statistical information to the statistical information aggregator 13. However, in the main operation, the statistical information acquirer 212 may not acquire the statistical information and may not output the acquired statistical information.

The data converter 213 acquires the operation results obtained by the operator 211. Next, in the preceding operation, the data converter 213 receives input of the number N of candidate decimal point positions from the controller 10. For each of the candidate decimal point positions, the data converter 213 shifts fixed-point number data by a shift amount specified by the received candidate decimal point position. The data converter 213 executes a saturation process on an upper bit and a rounding process on a lower bit, together with the shifting. By executing this, the data converter 213 calculates a number N of operation results indicating updated decimal point positions of the fixed-point number data. After that, the data converter 213 causes the number N of operation results obtained using the candidate decimal point positions to be stored in the candidate storage section 300.

In the main operation, the data converter 213 receives, from the controller 10, input of the decimal point position determined from the statistical information acquired in the preceding operation. The data converter 213 shifts the fixed-point number data by a shift amount specified by the received decimal point position. The data converter 213 executes the saturation process on an upper bit and the rounding process on a lower bit, together with the shifting. By executing this, the data converter 213 updates the decimal point position of the fixed-point number data. The data converter 213 causes an operation result indicating the updated decimal point position to be stored in the scalar register file 111 and the data RAM 42.

The vector unit 122 is coupled to the controller 10, the register file 11, and the memory interface 15. The vector unit 122 includes a plurality of combinations of operators 221, statistical information acquirers 222, and data converter 223. In the present embodiment, the vector unit 122 executes the preceding operation using the number N of candidate decimal point positions to acquire statistical information. When the candidate decimal point position that matches the decimal point position calculated from the statistical information does not exist, the vector unit 122 executes the two operations that are the main operation of executing calculation using the decimal point position determined from the statistical information of the preceding operation and obtaining operation results.

Each of the operators 221 uses one or some of data items held in the data RAM 42, the vector register file 112, or the vector accumulator register 114 to execute an operation, such as a product-sum operation. The operator 221 executes the operation using a bit width sufficient to express operation results. The operation to be executed by the operator 221 in the preceding operation is the same as or similar to an operation to be executed by the operator 221 in the main operation. The operator 221 outputs the operation results to the data RAM 42, the corresponding statistical information acquirer 222, and the corresponding data converter 223.

The statistical information acquirer 222 receives input of data of the operation results from the operator 221. In this case, the statistical information acquirer 222 acquires the data of the operation results expressed using a bit width sufficient to maintain the accuracy.

The statistical information acquirer 222 acquires statistical information from the data of the operation results. For example, to acquire an unsigned most significant bit position, the statistical information acquirer 222 uses an unsigned most significant bit detector to generate output data having a value of 1 at the unsigned most significant bit position and values of 0s at other bit positions. After that, the statistical information acquirer 222 outputs the acquired statistical information to the statistical information aggregator 13. However, in the main operation, the statistical information acquirer 222 may not acquire the statistical information and may not output the acquired statistical information.

The data converter 223 acquires the operation results obtained by the operator 221. Next, in the preceding operation, the data converter 223 receives, from the controller 10, input of the number N of candidate decimal point positions. For each of the candidate decimal point positions, the data converter 223 shifts fixed-point number data by a shift amount specified by the received candidate decimal point position. The data converter 223 executes a saturation process on an upper bit and a rounding process on a lower bit, together with the shifting. By executing this, the data converter 223 calculates a number N of operation results indicating updated decimal point positions of the fixed-point number data. After that, the data converter 223 causes the number N of operation results obtained using the candidate decimal point positions to be stored in the candidate storage section 300.

The data converter 223 acquires the operation results obtained by the operator 221. Next, in the main operation, the data converter 223 receives, from the controller 10, input of the decimal point position determined from the statistical information acquired in the preceding operation. The data converter 223 shifts the fixed-point number data by a shift amount specified by the received decimal point position. The data converter 223 executes a saturation process on an upper bit and a rounding process on a lower bit, together with the shifting. By executing this, the data converter 223 updates the decimal point position of the fixed-point number data. The data converter 223 causes an operation result indicating the updated decimal point position to be stored in the accumulator 103 and causes the operation result indicating the updated decimal point position to be stored in the vector register file 112 and the data RAM 42 after the storage in the accumulator 103.

The statistical information aggregator 13 receives, from the statistical information acquirer 212, input of the statistical information acquired from the data of the operation results obtained by the operator 211. The statistical information aggregator 13 receives, from the statistical information acquirers 222, input of the statistical information acquired from the data of the operation results obtained by the operators 221. The statistical information aggregator 13 aggregates the statistical information acquired from the statistical information acquirer 212 and the statistical information acquired from the statistical information acquirers 222 and outputs the aggregated statistical information to the statistical information storage section 115.

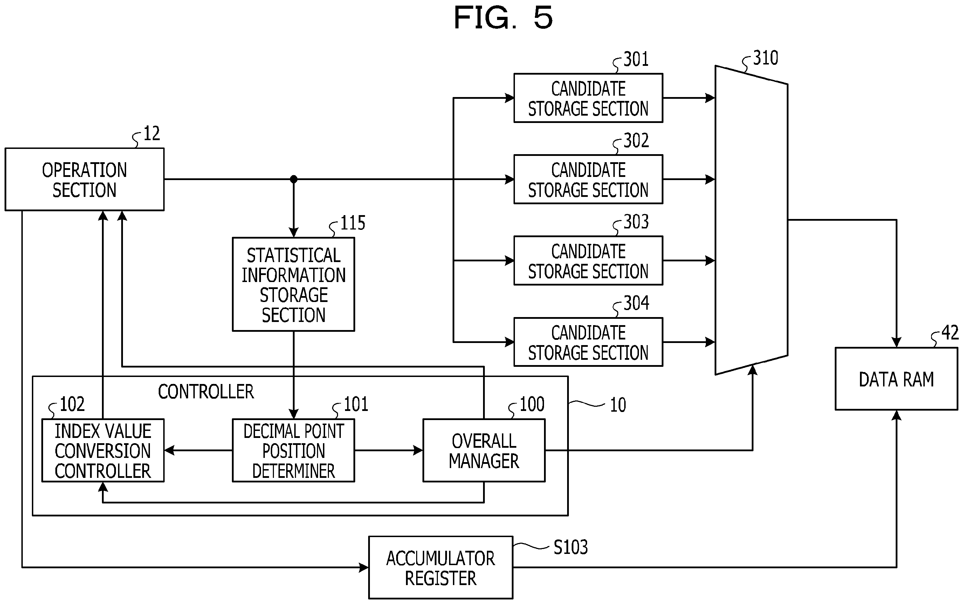

Next, the controller 10 is described. FIG. 5 is a block diagram illustrating details of the controller. An example in which the number of candidate decimal point positions is 4 is described below. N is an integer of 2 or greater. The larger N is, the more the re-execution of an operation described later is avoided. However, the larger N is, the larger the number of preceding operations is and the larger a storage region is. As illustrated in FIG. 5, the controller 10 includes an overall manager 100, a decimal point position determiner 101, and an index value conversion controller 102.

For example, the candidate storage section 300 includes candidate storage sections 301 to 304. The number of candidate storage sections 301 to 304 corresponds to the number of candidate decimal point positions. The candidate storage sections 301 to 304 store the operation results of the preceding operation executed by the operation section 12 using the candidate decimal point positions.

The overall manager 100 manages the execution of the preceding operation by the operation section 12 and the execution of the main operation by the operation section 12. The overall manager 100 holds information of a layer in which the overall manager 100 causes the operation section 12 to execute an operation in the deep learning. When the layer in which the overall manager 100 causes the operation section 12 to execute the operation transitions to a next layer, the overall manager 100 determines the execution of the preceding operation.

Next, the overall manager 100 acquires the 4 candidate decimal point positions specified by the operating person. The overall manager 100 notifies the acquired 4 candidate decimal point positions to the index value conversion controller 102 and instructs the operation section 12 to execute the preceding operation. The preceding operation by the operation section 12 is an example of a "first operation". The operation results of the preceding operation are an example of a "first operation result".

After that, when the execution of the preceding operation by the operation section 12 is completed, the overall manager 100 acquires, from the decimal point position determiner 101, a newly calculated decimal point position. The overall manager 100 determines whether a candidate decimal point position that matches the decimal point position acquired from the decimal point position determiner 101 exists.

When the candidate decimal point position that matches the decimal point position acquired from the decimal point position determiner 101 exists, the overall manager 100 determines, as an operation result, a fixed-point number having a decimal point position updated using the candidate decimal point position. For example, as illustrated in FIG. 5, the overall manager 100 causes a selector 310 to select the operation result from operation results indicating decimal point positions updated using the candidate decimal point positions stored in the candidate storage sections 301 to 304. After that, the overall manager 100 causes the determined operation result as a final operation result of the concerned layer to be stored in the data RAM 42.

On the other hand, when the candidate decimal point position that matches the decimal point position acquired from the decimal point position determiner 101 does not exist, the overall manager 100 determines the execution of the main operation. The overall manager 100 instructs the index value conversion controller 102 to output the newly determined decimal point position and causes the operation section 12 to execute the main operation. An operation result of the main operation is stored as the final operation result of the concerned layer in the data RAM 42 via the accumulator register 113. The main operation by the operation section 12 is an example of a "second operation". The operation result of the main operation is an example of a "second operation result". The overall manager 100 repeatedly executes, for each of the layers, control to cause the operation section 12 to execute the preceding operation and the main operation.

The overall manager 100 manages iterations in the deep learning. For example, when an instruction to execute an iteration a predetermined number of times is provided, the overall manager 100 counts the number of times that the iteration has been executed. When the number of times that the iteration has been executed reaches a predetermined number, the overall manager 100 determines the termination of the learning. After that, the overall manager 100 notifies the termination of the learning to the CPU 2 and terminates the learning, for example. The overall manager 100 is an example of a "manager".

When the preceding operation by the operation section 12 is terminated, the decimal point position determiner 101 acquires the statistical information from the statistical information storage section 115. The decimal point position determiner 101 uses the acquired statistical information to determine the optimal decimal point position. After that, the decimal point position determiner 101 outputs the determined decimal point position to the index value conversion controller 102. The decimal point position determiner 101 repeatedly executes a process of determining a decimal point position for each of the layers after the preceding operation.

The index value conversion controller 102 acquires the candidate decimal point positions from the overall manager 100. The index value conversion controller 102 receives, from the overall manager 100, an instruction to output the number N of candidate decimal point positions. The index value conversion controller 102 outputs the number N of candidate decimal point positions to the operation section 12.

After that, when the preceding operation by the operation section 12 is completed, the index value conversion controller 102 receives, from the decimal point position determiner 101, input of the decimal point position newly determined using the operation results of the preceding operation. When a candidate decimal point position that matches the decimal point position calculated by the decimal point position determiner 101 does not exist, the index value conversion controller 102 receives, from the overall manager 100, input of an instruction to output the newly determined decimal point position. After that, the index value conversion controller 102 outputs information of the newly determined decimal point position to the operation section 12.

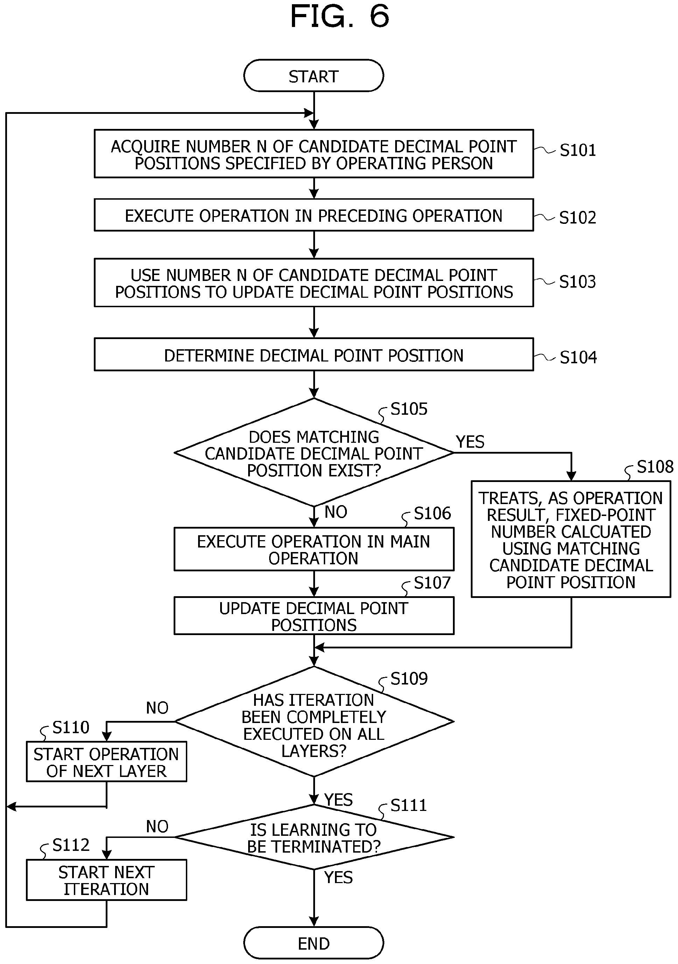

Next, the flow of the deep learning process by the operation circuit 4 according to the present embodiment is described with reference to FIG. 6. FIG. 6 is a flowchart of the deep learning process by the operation circuit according to the first embodiment.

The overall manager 100 of the controller 10 acquires the number N of candidate decimal point positions specified by the operating person (step S101). The overall manager 100 outputs the number N of candidate decimal point positions to the index value conversion controller 102.

The index value conversion controller 102 of the controller 10 outputs the number N of candidate decimal point positions to the operation section 12. Each of the operators 211 and 221 uses the number N of candidate decimal point positions and input position data to execute the operation in the preceding operation (step S102). The statistical information acquirers 212 and 222 calculate statistical information from results of the operations by the corresponding operators 211 and 221. The statistical information aggregator 13 aggregates the statistical information from the statistical information acquirers 212 and 222 and causes the aggregated statistical information to be stored in the statistical information storage section 115.

The data converters 213 and 223 acquire the results of the operations by the operators 211 and 221. Each of the data converters 213 and 223 uses the number N of candidate decimal point positions to update decimal point positions (step S103). Each of the data converters 213 and 223 causes a number N of operation results of the preceding operation to be stored in the candidate storage section 300.

The decimal point position determiner 101 of the controller 10 initializes the statistical information stored in the statistical information storage section 115. The decimal point position determiner 101 uses the statistical information of the operation results of the preceding operation to determine a new decimal point position (step S104).

The overall manager 100 of the controller 10 determines whether a candidate decimal point position that matches the new decimal point position determined by the decimal point position determiner 101 exists among the number N of candidate decimal point positions (step S105).

When the candidate decimal point position that matches the new decimal point position does not exist (No in step S105), the overall manager 100 instructs the index value conversion controller 102 to output the new decimal point position and instructs the operation section 12 to execute the main operation. Each of the operators 211 and 221 of the operation section 12 uses the input data to execute the operation in the main operation (step S106).

The data converters 213 and 223 of the operation section 12 update decimal point positions of results of the operations by the operators 211 and 221 based on the decimal point position input from the index value conversion controller 102 (step S107). In this manner, the operation section 12 executes the main operation. The operation section 12 treats the operation results of the main operation as an operation result of a concerned layer.

On the other hand, when the candidate decimal point position that matches the new decimal point position exists (Yes in step S105), the overall manager 100 acquires, from the candidate storage section 300, a fixed-point number calculated using the candidate decimal point position that matches the new decimal point position. The overall manager 100 treats the acquired fixed-point number as the operation result of the concerned layer (step S108).

After that, the overall manager 100 of the controller 10 determines whether an iteration has been completely executed on all the layers (step S109). When the iteration has not been completely executed on all the layers (No in step S109), the overall manager 100 starts an operation of a next layer (step S110). After that, the deep learning process returns to step S101.

On the other hand, when the iteration has been completely executed on all the layers (Yes in step S109), the overall manager 100 of the controller 10 determines whether the learning is to be terminated (step S111).

When the learning is not to be terminated (No in step S111), the overall manager 100 starts the next iteration (step S112). After that, the deep learning process returns to step S101.

On the other hand, when the learning is to be terminated (Yes in step Sill), the overall manager 100 notifies the completion of the learning to the CPU 2 and terminates the learning.

As described above, the operation circuit according to the present embodiment uses a number N of candidate decimal point positions determined in advance to execute the preceding operation and obtains a number N of operation results of the preceding operation. The operation circuit uses statistical information acquired from the operation results of the preceding operation to newly determine a decimal point position appropriate for an operation executed using input data. When a candidate decimal point position that matches the new decimal point position exists, the operation circuit treats, as an operation result of a concerned layer, an operation result of the preceding operation that has been calculated using the candidate decimal point position. On the other hand, when the candidate decimal point position that matches the new decimal point position does not exist, the operation circuit uses the new decimal point position to execute the main operation and treats an operation result of the main operation as the operation result of the concerned layer. As described above, when the operation circuit may speculatively execute the preceding operation using the number N of candidate decimal point positions, and an operation result of the speculative operation matches an appropriate decimal point position, the operation circuit may treat the operation result of the speculative operation as the operation result of the concerned layer.

Therefore, the appropriate decimal point position may be determined when the deep learning is executed using Define-by-Run in which the computational graph that serves as the structure of the neural network is built while the deep learning process is executed. It is possible to improve the accuracy of the learning to be executed using a fixed decimal point. When a result of the speculative operation is the same as a result of an operation using an appropriate decimal point position, the result of the speculative operation may be used, and it is therefore possible to avoid the execution of the main operation. For example, it is possible to reduce an operation time period as overhead, compared to the case where an operation is executed twice since the main operation is executed after an appropriate decimal point position is calculated using statistical information of the preceding operation without the execution of the speculative operation.

A reduction rate of the operation time period is probabilistic due to the speculative operation. However, for example, the case where the probability that the operation result of the speculative operation is used as an operation result of a layer is 20% is considered. When a time period for executing an operation once is 1 standard time period, a time period for executing the operation by the operation circuit according to the present embodiment is expressed by 1.2 standard time periods $\times$ 0.8 + 1 time $\times$ (1.2 + 1) standard time periods $\times$ 0.2. On the other hand, when a time period for executing the operation twice is calculated, the time period is expressed by 2 times $\times$ 1 standard time period. For example, the operation circuit according to the present embodiment may reduce the overhead by 60%, compared to the case where the operation is executed twice. Therefore, when the deep learning is executed using Define-by-Run, it is possible improve the accuracy of the learning using a fixed decimal point, reduce the overhead for the operation, and reduce the time period for the learning.

[Second Embodiment]

Next, a second embodiment is described. An operation circuit 4 according to the present embodiment is different from the first embodiment in that the operation circuit 4 according to the present embodiment generates candidate decimal point positions from a decimal point position used for a previous layer. The operation circuit 4 according to the present embodiment is also illustrated in FIGs. 4 and 5. In the following description, the same functions of the sections as those described in the first embodiment are not described. The case where 4 candidate decimal point positions are used is described below.

The overall manager 100 acquires a decimal point position used for a previous layer. For example, the decimal point position used for the previous layer is stored in the data RAM 42. The overall manager 100 acquires, as the candidate decimal point positions, bit values obtained by adding +1, 0, -1, -2 to a bit value specified by the decimal point position used for the previous layer. After that, the overall manager 100 causes the operation section 12 to execute the preceding operation using the candidate decimal point positions. In this case, to improve the probability that an operation result of the speculative operation may be used, it is preferable that the candidate decimal point positions be determined such that the decimal point position used for the previous layer is between two of the candidate decimal point positions.

After that, when a candidate decimal point position that matches a new decimal point position determined by the decimal point position determiner 101 from statistical information of the operations executed in the preceding operation exists, the overall manager 100 treats, as an operation result of a concerned layer, an operation result of executing the preceding operation using the candidate decimal point position. When the candidate decimal point position that matches the new decimal point position does not exist, the overall manager 100 causes the operation section 12 to execute the main operation using the new decimal point position and treats an operation result of the main operation as the operation result of the concerned layer.

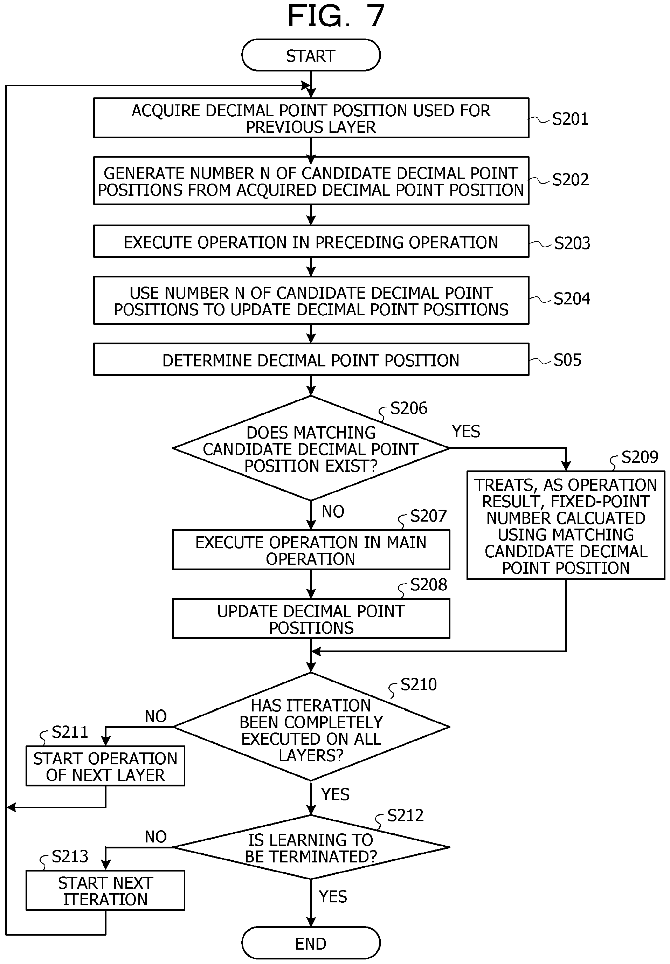

Next, the flow of a deep learning process by the operation circuit 4 according to the present embodiment is described with reference to FIG. 7. FIG. 7 is a flowchart of the deep learning process by the operation circuit according to the second embodiment.

The overall manager 100 of the controller 10 acquires a decimal point position used for a previous layer (step S201).

The index value conversion controller 102 of the controller 10 generates a number N of candidate decimal point positions by shifting, by predetermined bit numbers, a bit position indicated by the decimal point position used for the previous layer, or the like (step S202).

Next, the index value conversion controller 102 outputs the number N of candidate decimal point positions to the operation section 12. Each of the operators 211 and 221 of the operation section 12 uses the number N of candidate decimal point positions and input position data to execute the operation in the preceding operation (step S203). The statistical information acquirers 212 and 222 calculate statistical information from results of the operations by the corresponding operators 211 and 221. The statistical information aggregator 13 aggregates the statistical information from the statistical information acquirers 212 and 222 and causes the aggregated statistical information to be stored in the statistical information storage section 115.

The data converters 213 and 223 acquire the results of the operations by the operators 211 and 221. Each of the data converters 213 and 223 use the number N of candidate decimal point positions to update decimal point positions (step S204). Each of the data converters 213 and 223 causes a number N of operation results of the preceding operation to be stored in the candidate storage section 300.

The decimal point position determiner 101 of the controller 10 initializes the statistical information stored in the statistical information storage section 115. The decimal point position determiner 101 determines a new decimal point position using the statistical information of the operation results of the preceding operation (step S205).

The overall manager 100 of the controller 10 determines whether a candidate decimal point position that matches the new decimal point position determined by the decimal point position determiner 101 exists among the number N of candidate decimal point positions (step S206).

When the candidate decimal point position that matches the new decimal point position does not exist (No in step S206), the overall manager 100 instructs the index value conversion controller 102 to output the new decimal point position and instructs the operation section 12 to execute the main operation. Each of the operators 211 and 221 of the operation section 12 uses the input data to execute the operation in the main operation (step S207).

The data converters 213 and 223 of the operation section 12 update decimal point positions of results of the operations by the operators 211 and 221 based on the decimal point position input from the index value conversion controller 102 (step S208). In this manner, the operation section 12 executes the main operation. The overall manager 100 treats the operation results of the main operation as an operation result of a concerned layer.

On the other hand, when the candidate decimal point position that matches the new decimal point position exists (Yes in step S206), the overall manager 100 acquires, from the candidate storage section 300, a fixed-point number calculated using the candidate decimal point position that matches the new decimal point position. The overall manager 100 treats the acquired fixed-point number as the operation result of the concerned layer (step S209).

After that, the overall manager 100 of the controller 10 determines whether an iteration has been completely executed on all the layers (step S210). When the iteration has not been completely executed on all the layers (No in step S210), the overall manager 100 starts an operation of a next layer (step S211). After that, the deep learning process returns to step S201.

On the other hand, when the iteration has been completely executed on all the layers (Yes in step S210), the overall manager 100 of the controller 10 determines whether the learning is to be terminated (step S212).

When the learning is not to be terminated (No in step S212), the overall manager 100 starts the next iteration (step S213). After that, the deep learning process returns to step S201.

On the other hand, when the learning is to be terminated (Yes in step S212), the overall manager 100 notifies the completion of the learning to the CPU 2 and terminates the learning.

As described above, the operation circuit according to the present embodiment generates the candidate decimal point positions from the decimal point position used for the previous layer. When the layers have the same structure or similar structures, like a convolutional neural network (CNN) for deep learning, the decimal point position tends to be stable. Thus, by using the decimal point position used for the previous layer, it is possible to improve the probability that an operation result of the speculative operation may be used. It is, therefore, possible to reduce the operation time period as the overhead. Therefore, when the deep learning is executed using Define-by-Run, it is possible improve the accuracy of the learning using a fixed decimal point, reduce the overhead for the operation, and reduce the time period for the learning.

[Third Embodiment]

Next, a third embodiment is described. An operation circuit 4 according to the present embodiment is different from the first embodiment in that the operation circuit 4 according to the present embodiment generates candidate decimal point positions by limiting a decimal point position based on a product-sum operation executed in a target layer. For example, a process according to the present embodiment is executed on the layer in which the product-sum operation is executed. The operation circuit 4 according to the present embodiment is also illustrated in FIGs. 4 and 5. In the following description, the same functions of the sections as those described in the first embodiment are not described. The case where 4 candidate decimal point positions are used in the process in the layer in which the product-sum operation is executed is described below.

The overall manager 100 divides the product-sum operation to be executed in the target layer by K. For example, the overall manager 100 divides the product-sum operation by 4, as expressed in the following Equation (1). The product-sum operation to be executed in the target layer is an example of a "predetermined product-sum operation".

[Equation (1)]

$$\sum_N XW = \sum_0^{N1} XW + \sum_{N1}^{N2} XW + \sum_{N2}^{N3} XW + \sum_{N3}^{N4} XW \quad \cdots (1)$$

The left side of Equation (1) indicates the product-sum operation to be executed in the target layer. The right side of Equation (1) indicates product-sum operations obtained by dividing the product-sum operation of the left side by 4. Hereinafter, the product-sum operations after the division are referred to as "divided product-sum operations".

Next, the overall manager 100 causes the operation section 12 to calculate an operation result of each of the divided product-sum operations after the division by K. Then, the overall manager 100 selects an operation result indicating the maximum value among the operation results of the divided product-sum operations.

The operation result of the product-sum operation of the target layer is equal to or smaller than K times the maximum value among the operation results of the divided product-sum operations. The overall manager 100 calculates a value by multiplying, by K, the operation result indicating the maximum value among the operation results of the divided product-sum operations. The overall manager 100 calculates, as an upper limit decimal point position, a decimal point position indicated by the value calculated by multiplying, by K, the operation result indicating the maximum value among the operation results of the divided product-sum operations. For example, when the maximum value among the operation results of the product-sum operations after the division by K is VMAX, the overall manager 100 calculates the upper limit decimal point position as B = log_2(VMAX × K). In this case, B indicates the upper limit decimal point position.

A bit position indicated by a decimal point position of the operation result of the product-sum operation of the target layer is considered to be located on the upper side of a bit position indicated by the upper limit decimal point position. Thus, the overall manager 100 acquires, as the candidate decimal point positions, bit positions located on the upper side of the bit position indicated by the upper limit decimal point position. For example, when the foregoing B is the upper limit decimal point position, the overall manager 100 acquires B, B - 1, B - 2, and B - 3 as the 4 candidate decimal point positions.

Next, the overall manager 100 causes the operation section 12 to calculate the sum of the operation results of the product-sum operations after the division by K. The overall manager 100 uses the candidate decimal point positions to change the decimal point position for the calculated sum and causes the operation section 12 to execute the preceding operation.

After that, when a candidate decimal point position that matches a new decimal point position determined by the decimal point position determiner 101 from statistical information of the operations executed in the preceding operation exists, the overall manager 100 treats, as an operation result of a concerned layer, an operation result of executing the preceding operation using the candidate decimal point position. When the candidate decimal point position that matches the new decimal point position does not exist, the overall manager 100 causes the operation section 12 to execute the main operation using the new decimal point position and treats an operation result of the main operation as the operation result of the concerned layer.

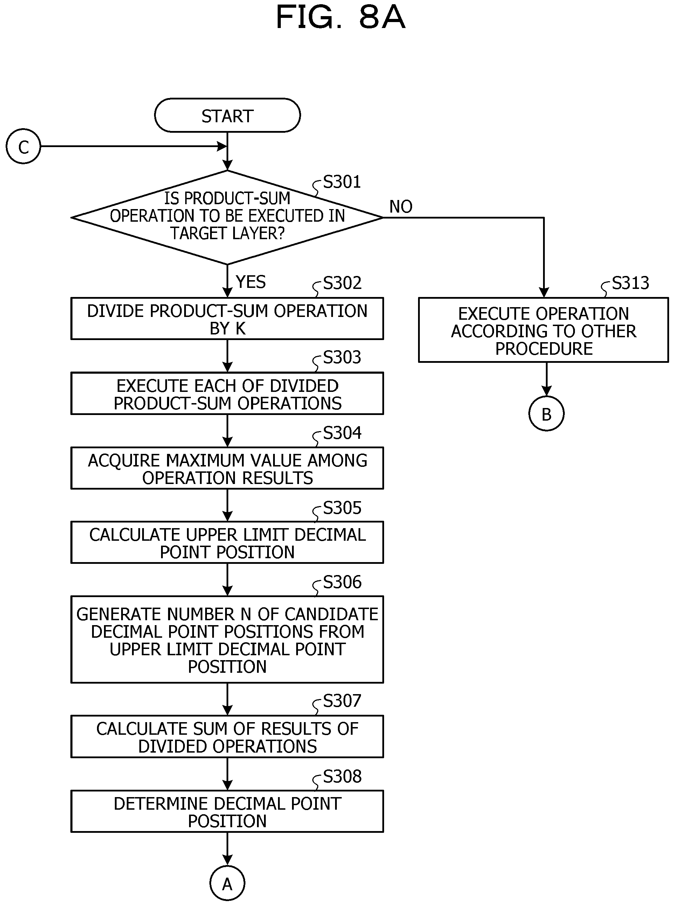

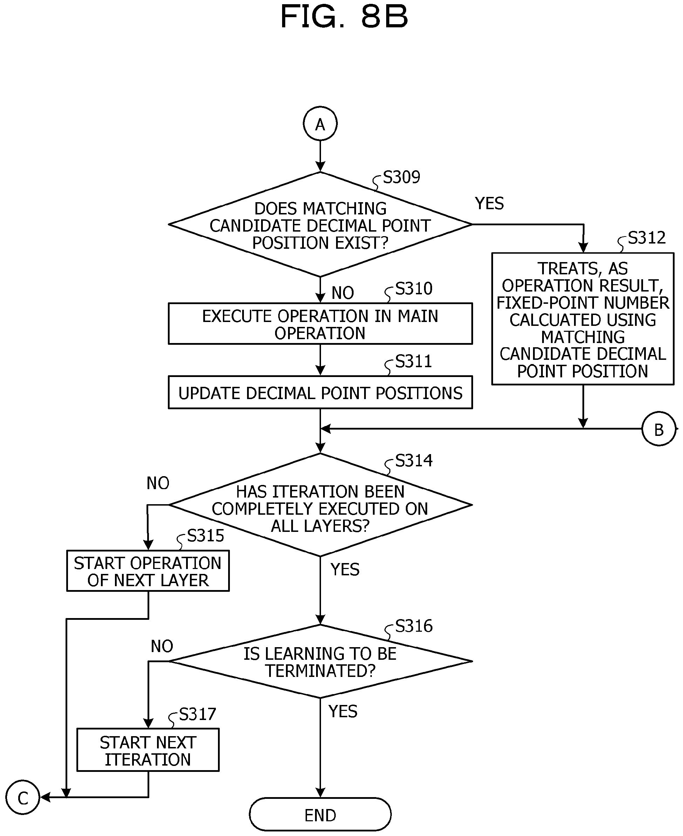

Next, the flow of a deep learning process by the operation circuit 4 according to the present embodiment is described with reference to FIGs. 8A and 8B. FIGs. 8A and 8B are a flowchart of the deep learning process by the operation circuit according to the third embodiment.

The overall manager 100 of the controller 10 determines whether the product-sum operation is to be executed in the target layer (step S301).

When the product-sum operation is to be executed in the target layer (Yes in step S301), the overall manager 100 divides the product-sum operation by K (step S302).

The overall manager 100 instructs the operation section 12 to execute the divided product-sum operations. The operation section 12 executes each of the divided product-sum operations (step S303).

The overall manager 100 acquires the maximum value among operation results of the divided product-sum operations (step S304).

The index value conversion controller 102 calculates a decimal point position indicated by a value obtained by multiplying the maximum value among the operation results of the divided product-sum operations by K, and treats the decimal point position as the upper limit decimal point position (step S305).

The index value conversion controller 102 generates a number N of candidate decimal point positions located on the upper side of a bit position indicated by the upper limit decimal point position (step S306).

Next, the index value conversion controller 102 instructs the operation section 12 to calculate the sum of the operation results of the divided product-sum operations. Each of the operators 211 and 221 of the operation section 12 calculates the sum of the operation results of the divided product-sum operations (step S307). The statistical information acquirers 212 and 222 calculate statistical information from the results of the operations by the corresponding operators 211 and 221. The statistical information aggregator 13 aggregates the statistical information from the statistical information acquirers 212 and 222 and causes the aggregated statistical information to be stored in the statistical information storage section 115.

The data converters 213 and 223 acquire the results of the operations by the operators 211 and 221. Each of the data converters 213 and 223 uses the number N of candidate decimal point positions to update decimal point positions. Each of the data converters 213 and 223 causes a number N of calculated operation results of the preceding operation and causes the operation results to be stored in the candidate storage section 300.

The decimal point position determiner 101 of the controller 10 initializes the statistical information stored in the statistical information storage section 115. The decimal point position determiner 101 determines a new decimal point position using the statistical information of the operation results of the preceding operation (step S308).

The overall manager 100 of the controller 10 determines whether a candidate decimal point position that matches the new decimal point position determined by the decimal point position determiner 101 exists among the number N of candidate decimal point positions (step S309).

When the candidate decimal point position that matches the new decimal point position does not exist (No in step S309), the overall manager 100 instructs the index value conversion controller 102 to output the new decimal point position and instructs the operation section 12 to execute the main operation. Each of the operators 211 and 221 of the operation section 12 uses the input data to execute the operation in the main operation (step S310).

The data converters 213 and 223 of the operation section 12 update the decimal point positions of the results of the operations by the operators 211 and 221 based on the decimal point position input from the index value conversion controller 102 (step S311). In this manner, the operation section 12 executes the main operation. The overall manager 100 treats operation results of the main operation as an operation result of the target layer.

On the other hand, when the candidate decimal point position that matches the new decimal point position exists (Yes in step S309), the overall manager 100 selects, as the operation result of the target layer, a fixed-point number calculated using the candidate decimal point position that matches the new decimal point position (step S312).

On the other hand, when the product-sum operation is not to be executed in the target layer (No in step S301), the overall manager 100 executes an operation of the target layer according to another procedure (step S313). As the other procedure, the procedure described in the first or second embodiment may be used.

After that, the overall manager 100 of the controller 10 determines whether an iteration has been completely executed on all the layers (step S314). When the iteration has not been completely executed on all the layers (No in step S314), the overall manager 100 starts an operation of a next layer (step S315). After that, the deep learning process returns to step S301.

On the other hand, when the iteration has been completely executed on all the layers (Yes in step S314), the overall manager 100 of the controller 10 determines whether the learning is to be terminated (step S316).

When the learning is not to be terminated (No in step S316), the overall manager 100 starts the next iteration (step S317). After that, the deep learning process returns to step S301.

On the other hand, when the learning is to be terminated (Yes in step S316), the overall manager 100 notifies the completion of the learning to the CPU 2 and terminates the learning.

As described above, the operation circuit according to the present embodiment divides the product-sum operation to be executed in the target layer, calculates the upper limit decimal point position from the maximum value among the operation results of the divided product-sum operations, and generates the candidate decimal point positions from the calculated upper limit decimal point position. It is, therefore, possible to select a candidate decimal point position from decimal point positions in a limited range and increase the probability that an operation result of the speculative operation may be used. It is, therefore, possible to reduce the operation time period as the overhead. Therefore, when the deep learning is executed using Define-by-Run, it is possible improve the accuracy of the learning using a fixed decimal point, reduce the overhead for the operation, and reduce the time period for the learning.

## Claims

1. An arithmetic processing device comprising:

   an executing unit configured to execute a first operation and a second operation; and
   a management unit configured to:

   acquire a first operation result of the first operation executing by using a candidate decimal point position,
   determine a specific decimal point position determined based on statistical information of the first operation result, and
   acquire, as a final operation result, either the first operation result or the second operation result of a second operation executing by using the specific decimal point position, based on the candidate decimal point position and the specific decimal point position.

2. The arithmetic processing device according to claim 1, wherein
   when the candidate decimal point position that matches the specific decimal point position exists, the processor treats, as the final operation result, the first operation result of the first operation executed using the candidate decimal point position that matches the specific decimal point position.

3. The arithmetic processing device according to claim 1, wherein
   when the candidate decimal point position that matches the specific decimal point position does not exist, the processor treats the second operation result as the final operation result.

4. The arithmetic processing device according to claims 1 or 3, wherein

the memory stores the candidate decimal point position determined in advance.

5. The arithmetic processing device according to any one of claims 1 to 3, wherein

the management unit acquires a plurality of candidate decimal point position including the candidate decimal point position,
the executing executes the first operation using each of the plurality of candidate decimal point position, and
the management unit acquires the statistical information based on a plurality of a first operation result including the first operation result, the plurality of a first operation result executing by using each of the plurality of candidate decimal point position.

6. The arithmetic processing device according to any one of claims 1 to 3, wherein the management unit is further configured to:

repeatedly acquire the final operation result, for each of continuous processing layers for which corresponding predetermined operations as the first operation and the second operation have been determined, and
generate, based on either the candidate decimal point position used to acquire the final operation result of a specific processing layer or the specific decimal point position, the candidate decimal point position for the next processing layer of the specific processing layer.

7. The arithmetic processing device according to any one of claims 1 to 4, wherein

the executing unit executes a predetermined product-sum operation as the first operation and the second operation, and
the management unit generates the candidate decimal point position based on the predetermined product-sum operation.

8. A method for controlling an arithmetic processing device having an operation circuit, the method comprising:

acquiring a first operation result of a first operation executing by using a candidate decimal point position;
determining a specific decimal point position based on statistical information of the first operation result; and
acquiring, as a final operation result, either the first operation result or a second operation result of a second operation executing by using the specific decimal point position, based on the candidate decimal point position and the specific decimal point position.

9. The method according to claim 8, wherein the acquiring the first operation result includes
when the candidate decimal point position that matches the specific decimal point position exists, acquiring, as the final operation result, the first operation result of the first operation executed using the candidate decimal point position that matches the specific decimal point position.

10. The method according to claim 8 or 9, wherein the acquiring the second operation result includes
when the candidate decimal point position that matches the specific decimal point position does not exist, acquiring, the second operation result as the final operation result.

11. An arithmetic processing program that causes a computer to execute a process, the process comprising:

acquiring a first operation result of a first operation executing by using a candidate decimal point position;
determining a specific decimal point position based on statistical information of the first operation result; and
acquiring, as a final operation result, either the first operation result or a second operation result of a second operation executing by using the specific decimal point position, based on the candidate decimal point position and the specific decimal point position.

12. The arithmetic processing program according to claim 11, wherein the acquiring the first operation result includes
when the candidate decimal point position that matches the specific decimal point position exists, acquiring, as the final operation result, the first operation result of the first operation executed using the candidate decimal point position that matches the specific decimal point position.

13. The arithmetic processing program according to claim 11, wherein the acquiring the second operation result includes

when the candidate decimal point position that matches the specific decimal point position does not exist, acquiring, the second operation result as the final operation result.

**Patentansprüche**

1. Vorrichtung zur arithmetischen Verarbeitung, umfassend:

   eine Ausführungseinheit, die so konfiguriert ist, dass sie eine erste Operation und eine zweite Operation ausführt; und
   eine Verwaltungseinheit, die konfiguriert ist zum:

   Erfassen eines ersten Operationsergebnisses der ersten Operation, die unter Verwendung einer in Frage kommenden Dezimalpunktposition ausgeführt wird,
   Bestimmen einer spezifischen Dezimalpunktposition, die basierend auf statistischen Informationen des ersten Operationsergebnisses bestimmt wurde, und
   Erfassen, als endgültiges Operationsergebnis, entweder des ersten Operationsergebnisses oder des zweiten Operationsergebnisses einer zweiten Operation, die unter Verwendung der spezifischen Dezimalpunktposition ausgeführt wird, basierend auf der in Frage kommenden Dezimalpunktposition und der spezifischen Dezimalpunktposition.

2. Vorrichtung zur arithmetischen Verarbeitung nach Anspruch 1, wobei
   wenn die in Frage kommende Dezimalpunktposition, die mit der spezifischen Dezimalpunktposition übereinstimmt, existiert, der Prozessor das erste Operationsergebnis der ersten Operation, die unter Verwendung der in Frage kommenden Dezimalpunktposition, die mit der spezifischen Dezimalpunktposition übereinstimmt, ausgeführt wird, als das endgültige Operationsergebnis behandelt.

3. Vorrichtung zur arithmetischen Verarbeitung nach Anspruch 1, wobei
   wenn die in Frage kommenden Dezimalpunktposition, die mit der spezifischen Dezimalpunktposition übereinstimmt, nicht existiert, der Prozessor das zweite Operationsergebnis als das endgültige Operationsergebnis behandelt.

4. Vorrichtung zur arithmetischen Verarbeitung nach Ansprüchen 1 oder 3, wobei
   der Speicher die im Voraus bestimmte in Frage kommenden Dezimalpunktposition speichert.

5. Vorrichtung zur arithmetischen Verarbeitung nach einem der Ansprüche 1 bis 3, wobei

   die Verwaltungseinheit eine Vielzahl von in Frage kommenden Dezimalpunktpositionen erfasst, einschließlich der in Frage kommenden Dezimalpunktposition,
   die Ausführung die erste Operation unter Verwendung jeder der Vielzahl von in Frage kommenden Dezimalpunktpositionen ausführt, und
   die Verwaltungseinheit die statistischen Informationen basierend auf einer Vielzahl eines ersten Operationsergebnisses, einschließlich des ersten Operationsergebnisses, erfasst, wobei die Vielzahl eines ersten Operationsergebnisses unter Verwendung jeder der Vielzahl von in Frage kommenden Dezimalpunktpositionen ausgeführt wird.

6. Vorrichtung zur arithmetischen Verarbeitung nach einem der Ansprüche 1 bis 3, wobei die Verwaltungseinheit weiter konfiguriert ist zum:

   wiederholten Erfassen des endgültigen Operationsergebnisses für jede der kontinuierlichen Verarbeitungsschichten, für die entsprechende vorbestimmte Operationen als die erste Operation und die zweite Operation bestimmt wurden, und
   Erzeugen, basierend auf entweder der in Frage kommenden Dezimalpunktposition, die verwendet wird, um das endgültige Operationsergebnis einer spezifischen Verarbeitungsschicht zu erfassen, oder der spezifischen Dezimalpunktposition, der in Frage kommenden Dezimalpunktposition für die nächste Verarbeitungsschicht der spezifischen Verarbeitungsschicht.

7. Vorrichtung zur arithmetischen Verarbeitung nach einem der Ansprüche 1 bis 4, wobei

die Ausführungseinheit eine vorbestimmte Produkt-Summen-Operation als die erste Operation und die zweite Operation ausführt, und
die Verwaltungseinheit die in Frage kommende Dezimalpunktposition basierend auf der vorbestimmten Produkt-Summen-Operation erzeugt.

8. Verfahren zur Steuerung einer Vorrichtung zur arithmetischen Verarbeitung, die eine Operationsschaltung aufweist, wobei das Verfahren umfasst:

Erfassen eines ersten Operationsergebnisses einer ersten Operation, die unter Verwendung einer in Frage kommenden Dezimalpunktposition ausgeführt wird;
Bestimmen einer spezifischen Dezimalpunktposition basierend auf statistischen Informationen des ersten Operationsergebnisses; und
Erfassen, als endgültiges Operationsergebnis, entweder des ersten Operationsergebnisses oder eines zweiten Operationsergebnisses einer zweiten Operation, die unter Verwendung der spezifischen Dezimalpunktposition ausgeführt wird, basierend auf der in Frage kommenden Dezimalpunktposition und der spezifischen Dezimalpunktposition.

9. Verfahren nach Anspruch 8, wobei das Erfassen des ersten Operationsergebnisses einschließt
wenn die in Frage kommende Dezimalpunktposition, die mit der spezifischen Dezimalpunktposition übereinstimmt, existiert, Erfassen des ersten Operationsergebnisses der ersten Operation, die unter Verwendung der in Frage kommenden Dezimalpunktposition, die mit der spezifischen Dezimalpunktposition übereinstimmt, ausgeführt wird, als das endgültige Operationsergebnis.

10. Verfahren nach Anspruch 8 oder 9, wobei das Erfassen des zweiten Operationsergebnisses einschließt
wenn die in Frage kommenden Dezimalpunktposition, die mit der spezifischen Dezimalpunktposition übereinstimmt, nicht existiert, Erfassen des zweiten Operationsergebnisses als das endgültige Operationsergebnis.

11. Programm zur arithmetischen Verarbeitung, das einen Computer veranlasst, einen Prozess auszuführen, wobei der Prozess umfasst:

Erfassen eines ersten Operationsergebnisses einer ersten Operation, die unter Verwendung einer in Frage kommenden Dezimalpunktposition ausgeführt wird;
Bestimmen einer spezifischen Dezimalpunktposition basierend auf statistischen Informationen des ersten Operationsergebnisses; und
Erfassen, als endgültiges Operationsergebnis, entweder des ersten Operationsergebnisses oder eines zweiten Operationsergebnisses einer zweiten Operation, die unter Verwendung der spezifischen Dezimalpunktposition ausgeführt wird, basierend auf der in Frage kommenden Dezimalpunktposition und der spezifischen Dezimalpunktposition.

12. Programm zur arithmetischen Verarbeitung nach Anspruch 11, wobei das Erfassen des ersten Operationsergebnisses einschließt
wenn die in Frage kommende Dezimalpunktposition, die mit der spezifischen Dezimalpunktposition übereinstimmt, existiert, Erfassen des ersten Operationsergebnisses der ersten Operation, die unter Verwendung der in Frage kommenden Dezimalpunktposition, die mit der spezifischen Dezimalpunktposition übereinstimmt, ausgeführt wird, als das endgültige Operationsergebnis.

13. Programm zur arithmetischen Verarbeitung nach Anspruch 11, wobei das Erfassen des zweiten Operationsergebnisses einschließt
wenn die in Frage kommenden Dezimalpunktposition, die mit der spezifischen Dezimalpunktposition übereinstimmt, nicht existiert, Erfassen des zweiten Operationsergebnisses als das endgültige Operationsergebnis.

**Revendications**

1. Dispositif de traitement arithmétique, comprenant :

une unité d'exécution configurée pour exécuter une première opération et une seconde opération ; et
une unité de gestion configurée pour :

obtenir un premier résultat d'opération de la première opération s'exécutant en utilisant une position de point décimal candidate,

déterminer une position de point décimal spécifique déterminée sur la base d'informations statistiques du premier résultat d'opération, et

obtenir, en tant que résultat d'opération final, soit le premier résultat d'opération soit le second résultat d'opération d'une seconde opération s'exécutant en utilisant la position de point décimal spécifique, sur la base de la position de point décimal candidate et de la position de point décimal spécifique.

**2.** Dispositif de traitement arithmétique selon la revendication 1, dans lequel

lorsque la position de point décimal candidate qui correspond à la position de point décimal spécifique existe, le processeur traite, en tant que résultat d'opération final, le premier résultat d'opération de la première opération exécutée en utilisant la position de point décimal candidate qui correspond à la position de point décimal spécifique.

**3.** Dispositif de traitement arithmétique selon la revendication 1, dans lequel

lorsque la position de point décimal candidate qui correspond à la position de point décimal spécifique n'existe pas, le processeur traite le second résultat d'opération en tant que résultat d'opération final.

**4.** Dispositif de traitement arithmétique selon les revendications 1 ou 3, dans lequel la mémoire stocke la position de point décimal candidate déterminée à l'avance.

**5.** Dispositif de traitement arithmétique selon l'une quelconque des revendications 1 à 3, dans lequel

l'unité de gestion obtient une pluralité de positions de point décimal candidates incluant la position de point décimal candidate,

l'unité d'exécution exécute la première opération en utilisant chacune de la pluralité de positions de point décimal candidates, et

l'unité de gestion obtient les informations statistiques sur la base d'une pluralité d'un premier résultat d'opération incluant le premier résultat d'opération, la pluralité d'un premier résultat d'opération s'exécutant en utilisant chacune de la pluralité de positions de point décimal candidates.

**6.** Dispositif de traitement arithmétique selon l'une quelconque des revendications 1 3, dans lequel l'unité de gestion est en outre configurée pour :

obtenir de manière répétée le résultat d'opération final, pour chacune de couches de traitement continues pour lesquelles des opérations prédéterminées correspondantes comme la première opération et la seconde opération ont été déterminées, et

générer, sur la base de soit la position de point décimal candidate utilisée pour obtenir le résultat d'opération final d'une couche de traitement spécifique soit la position de point décimal spécifique, la position de point décimal candidate pour la couche de traitement suivante de la couche de traitement spécifique.

**7.** Dispositif de traitement arithmétique selon l'une quelconque des revendications 1 à 4, dans lequel

l'unité d'exécution exécute une opération produit-somme prédéterminée comme la première opération et la seconde opération, et

l'unité de gestion génère la position de point décimal candidate sur la base de l'opération produit-somme prédéterminée.

**8.** Procédé de commande d'un dispositif de traitement arithmétique présentant un circuit d'opération, le procédé comprenant les étapes consistant à :

obtenir un premier résultat d'opération d'une première opération s'exécutant en utilisant une position de point décimal candidate ;

déterminer une position de point décimal spécifique sur la base d'informations statistiques du premier résultat d'opération ; et

obtenir, en tant que résultat d'opération final, soit le premier résultat d'opération soit un second résultat d'opération d'une seconde opération s'exécutant en utilisant la position de point décimal spécifique, sur la base de la position de point décimal candidate et de la position de point décimal spécifique.

**9.** Procédé selon la revendication 8, dans lequel l'étape consistant à obtenir le premier résultat d'opération inclut l'étape consistant à

lorsque la position de point décimal candidate qui correspond à la position de point décimal spécifique existe, obtenir, en tant que résultat d'opération final, le premier résultat d'opération de la première opération exécutée en utilisant la position de point décimal candidate qui correspond à la position de point décimal spécifique.

**10.** Procédé selon la revendication 8 ou 9, dans lequel l'étape consistant à obtenir le second résultat d'opération inclut l'étape consistant à

lorsque la position de point décimal candidate qui correspond à la position de point décimal spécifique n'existe pas, obtenir le second résultat d'opération en tant que résultat d'opération final.

**11.** Programme de traitement arithmétique qui amène un ordinateur à exécuter un processus, le processus comprenant les étapes consistant à :

obtenir un premier résultat d'opération d'une première opération s'exécutant en utilisant une position de point décimal candidate ;

déterminer une position de point décimal spécifique sur la base d'informations statistiques du premier résultat d'opération ; et

obtenir, en tant que résultat d'opération final, soit le premier résultat d'opération soit un second résultat d'opération d'une seconde opération s'exécutant en utilisant la position de point décimal spécifique, sur la base de la position de point décimal candidate et de la position de point décimal spécifique.

**12.** Programme de traitement arithmétique selon la revendication 11, dans lequel l'étape consistant à obtenir le premier résultat d'opération inclut l'étape consistant à

lorsque la position de point décimal candidate qui correspond à la position de point décimal spécifique existe, obtenir, en tant que résultat d'opération final, le premier résultat d'opération de la première opération exécutée en utilisant la position de point décimal candidate qui correspond à la position de point décimal spécifique.

**13.** Programme de traitement arithmétique selon la revendication 11, dans lequel l'étape consistant à obtenir le second résultat d'opération inclut l'étape consistant à

lorsque la position de point décimal candidate qui correspond à la position de point décimal spécifique n'existe pas, obtenir le second résultat d'opération en tant que résultat d'opération final.

# FIG. 1

SERVER 1

CPU 2

MEMORY 3

OPERATION CIRCUIT 4

5

FIG. 2

# FIG. 3

FIG. 4

# FIG. 5

# FIG. 6

START

ACQUIRE NUMBER N OF CANDIDATE DECIMAL POINT POSITIONS SPECIFIED BY OPERATING PERSON — S101

EXECUTE OPERATION IN PRECEDING OPERATION — S102

USE NUMBER N OF CANDIDATE DECIMAL POINT POSITIONS TO UPDATE DECIMAL POINT POSITIONS — S103

DETERMINE DECIMAL POINT POSITION — S104

S105
DOES MATCHING CANDIDATE DECIMAL POINT POSITION EXIST?

YES

S108
TREATS, AS OPERATION RESULT, FIXED-POINT NUMBER CALCUATED USING MATCHING CANDIDATE DECIMAL POINT POSITION

NO — S106
EXECUTE OPERATION IN MAIN OPERATION

S107
UPDATE DECIMAL POINT POSITIONS

S109
HAS ITERATION BEEN COMPLETELY EXECUTED ON ALL LAYERS?

NO

S110
START OPERATION OF NEXT LAYER

YES — S111
IS LEARNING TO BE TERMINATED?

NO

S112
START NEXT ITERATION

YES

END

# FIG. 7

START

ACQUIRE DECIMAL POINT POSITION USED FOR PREVIOUS LAYER — S201

GENERATE NUMBER N OF CANDIDATE DECIMAL POINT POSITIONS FROM ACQUIRED DECIMAL POINT POSITION — S202

EXECUTE OPERATION IN PRECEDING OPERATION — S203

USE NUMBER N OF CANDIDATE DECIMAL POINT POSITIONS TO UPDATE DECIMAL POINT POSITIONS — S204

DETERMINE DECIMAL POINT POSITION — S05

S206
DOES MATCHING CANDIDATE DECIMAL POINT POSITION EXIST?

YES

NO

S209
TREATS, AS OPERATION RESULT, FIXED-POINT NUMBER CALCUATED USING MATCHING CANDIDATE DECIMAL POINT POSITION

S207
EXECUTE OPERATION IN MAIN OPERATION

S208
UPDATE DECIMAL POINT POSITIONS

S210
HAS ITERATION BEEN COMPLETELY EXECUTED ON ALL LAYERS?

NO

S211
START OPERATION OF NEXT LAYER

YES

S212
IS LEARNING TO BE TERMINATED?

NO

S213
START NEXT ITERATION

YES

END

# FIG. 8A

START

C →

S301
IS PRODUCT-SUM
OPERATION TO BE EXECUTED IN
TARGET LAYER? — NO

YES

S302
DIVIDE PRODUCT-SUM OPERATION
BY K

S313
EXECUTE OPERATION
ACCORDING TO OTHER
PROCEDURE

B

S303
EXECUTE EACH OF DIVIDED
PRODUCT-SUM OPERATIONS

S304
ACQUIRE MAXIMUM VALUE AMONG
OPERATION RESULTS

S305
CALCULATE UPPER LIMIT DECIMAL
POINT POSITION

S306
GENERATE NUMBER N OF CANDIDATE
DECIMAL POINT POSITIONS FROM
UPPER LIMIT DECIMAL POINT
POSITION

S307
CALCULATE SUM OF RESULTS OF
DIVIDED OPERATIONS

S308
DETERMINE DECIMAL POINT
POSITION

A

# FIG. 8B

**EP 3 848 791 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018124681 A
- JP 2019074951 A

- JP 2009271598 A